# FASCICULE DE BREVET EUROPEEN

(11) **EP 1 459 869 B1**
(45) Date de publication et mention de la délivrance du brevet: **01.11.2017**
(21) Numéro de dépôt: 04290687.5
(22) Date de dépôt: 12.03.2004
(51) Int. Cl.: B60R 19/48, B62D 27/02, B29C 65/02

(54) **PIÈCE À PLAQUER SUR UN ÉLÉMENT DE CARROSSERIE, ÉLÉMENT DE CARROSSERIE APTE À LA RECEVOIR ET ENSEMBLE D'UNE TELLE PIÈCE ET D'UN TEL ÉLÉMENT**
TEIL ZUM AUFLEGEN AUF EIN KAROSSERIEBAUTEIL, KAROSSERIEBAUTEIL DAFÜR GEEIGNET UND BAUGRUPPE AUS DIESEN BEIDEN TEILEN
PART TO LAY ON A BODY PART ADAPTED TO RECEIVE SUCH A PART AND ASSEMBLY OF SUCH 2 PIECES

(30) Priorité: 13.03.2003 FR 0303135
(43) Date de publication de la demande: 22.09.2004
(73) Titulaire: COMPAGNIE PLASTIC OMNIUM, 69007 Lyon (FR)
(72) Inventeur: Migieu, Vincent, 01500 Amberieu en Bugey (FR); Verwaerde, Marc, 38460 Panossas (FR)
(74) Mandataire: Remy, Vincent Noel Paul

(56) Documents cités:
- EP-A- 0 349 688
- EP-B- 1 005 692
- FR-A- 1 127 388
- PATENT ABSTRACTS OF JAPAN vol. 1997, no. 07, 31 juillet 1997 (1997-07-31) -& JP 09 070892 A (SEIDENSHA DENSHI KOGYO KK), 18 mars 1997 (1997-03-18)

## Description

### 1) Domaine technique auquel se rapporte l'invention

L'invention se rapporte au domaine des pièces pour l'industrie automobile comportant au moins une partie en matière plastique.

Plus précisément, l'invention concerne une pièce à plaquer sur un élément de carrosserie, un élément de carrosserie apte à recevoir une telle pièce et un ensemble d'une telle pièce et d'un tel élément de carrosserie.

Une application particulière est la fixation, sur une peau de pare-chocs en matière plastique, d'une pièce en matière plastique comme par exemple un support de capteur.

### 2) Etat de la technique antérieur connu

Différentes solutions ont déjà été proposées pour fixer une pièce en matière plastique sur une peau de pare-chocs ou plus généralement sur une autre pièce en matière plastique servant d'élément de carrosserie. La pièce à plaquer est souvent un support pour un organe fonctionnel du véhicule, comme par exemple un capteur. Elle possède une face que l'on souhaite maintenir parallèle à une face de l'élément de carrosserie. Les solutions connues utilisent des rivets, des vis, des encliquetages, des soudures.

Parmi ces solutions, par exemple de EP1005692 qui dévoile le préambule de la revendication 1, certaines ménagent l'aspect extérieur de l'élément supportant la pièce en matière plastique, en évitant notamment les retassures ou les moyens de fixation apparents.

La présente invention appartient à cette catégorie de moyens de fixation qui préservent l'aspect esthétique de l'élément de carrosserie recevant la pièce en matière plastique à fixer. L'invention est une nouvelle alternative aux solutions connues.

### 3) Exposé de l'invention

L'invention a pour objet un ensemble selon la revendication 1.

On entend par fusion de matière tout procédé qui réunit la matière constituant la patte à la matière constituant la protubérance. Il peut s'agir de soudure, de brasure, d'une réaction chimique.

De préférence, la protubérance formée sur la face de l'élément de carrosserie est plus longue dans la direction perpendiculaire à la face interne que la patte de la pièce à plaquer, de manière à servir de guide pour le positionnement de la pièce à plaquer sur l'élément de carrosserie.

Selon d'autres caractéristiques de l'invention :
- l'élément de carrosserie est une peau de pare-chocs,
- la pièce à plaquer est un support de capteur,
- plusieurs protubérances formées sur l'élément de carrosserie servent à positionner précisément la pièce à plaquer sur l'élément de carrosserie.

### 4) Brève description des dessins

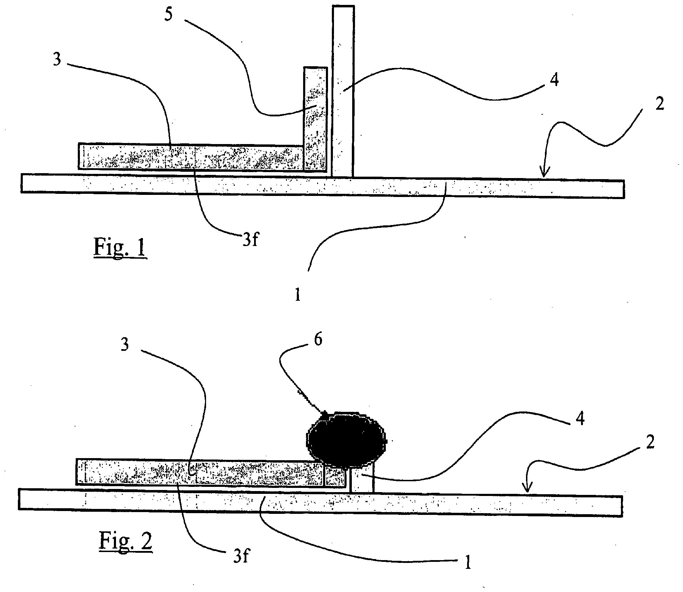

L'invention sera mieux comprise à la lecture de la description qui va suivre, donnée uniquement à titre d'exemple et faite en se référant au dessin annexé qui comporte :
- une figure 1, sur laquelle on voit une peau de pare-chocs et une partie d'un support de capteur,
- une figure 2, analogue à la figure 1, sur laquelle on voit les mêmes pièces après fusion de matière.

### 5) Exposé détaillé d'au moins un mode de réalisation

Sur les deux figures, on désigne :
1 = peau de pare-chocs.
2 = face interne de la peau de pare-chocs.
3 = partie d'un support de capteur dont une face 3f est à plaquer contre la face interne.
4 = protubérance en saillie de la face interne.
5 = patte venant s'étendre parallèlement à la protubérance. La patte est plus petite que la protubérance.
6 = matière fondue entraînant le mélange des matières constituant la protubérance et la patte.

On notera que l'invention n'est pas limitée au mode de réalisation précédemment décrit, mais est définie par les revendications.

Par exemple, en variante, chaque pièce pourrait être constituée de manière hybride d'une partie métallique et d'une partie en matière plastique, aux endroits appropriés pour permettre la fixation d'une telle pièce à un élément de carrosserie qui peut lui aussi être hybride.

Dans une autre variante, les faces que l'on désire plaquer l'une contre l'autre ne sont pas planes, mais possèdent par exemple une certaine courbure continue ou discontinue.

## Revendications

1. Ensemble d'un élément de carrosserie (1) et d'une pièce (3) dont une face (3f) est à plaquer contre la face interne (2) de l'élément de carrosserie (1), l'élément de carrosserie (1) comportant, sur cette face interne (2), une protubérance de fixation (4) en matière plastique, ladite pièce (3) ayant une partie de fixation (5) en matière plastique qui est réunie à ladite protubérance (4) par fusion de matière,
**caractérisée en ce que**
la partie de fixation (5) de la pièce (3) forme une patte qui, lorsque la pièce à plaquer (3) est positionnée sur l'élément de carrosserie (1), s'étend parallèlement à la protubérance (4) et perpendiculairement à la dite face interne (2).

2. Ensemble selon la revendication 1, dans lequel l'élément de carrosserie est une peau de pare-chocs.

3. Ensemble selon la revendication 1 ou 2, dans lequel la pièce (3) constitue un support de capteur.

4. Ensemble selon l'une quelconque des revendications 1 à 3, l'élément de carrosserie comportant plusieurs protubérances (4) servant à positionner précisément la pièce à plaquer (3).

5. Ensemble selon l'une quelconque des revendications précédentes, dans lequel la protubérance (4) formée sur la face (2) de l'élément de carrosserie (1) est plus longue dans la direction perpendiculaire à la face interne (2) que la patte (5) de la pièce à plaquer (3).

## Patentansprüche

1. Anordnung aus einem Karosserieelement (1) und einem Teil (3), von dem eine Seite (3f) gegen die Innenseite (2) des Karosserieelements (1) angepresst werden soll, wobei das Karosserieelement (1) auf dieser Innenseite (2) einen Vorsprung zum Befestigen (4) aus Kunststoff aufweist, wobei das Teil (3) einen Befestigungsteil (5) aus Kunststoff hat, der mit dem Vorsprung (4) durch Materialaufschmelzung verbunden ist,
**dadurch gekennzeichnet, dass**
der Befestigungsteil (5) des Teils (3) eine Lasche bildet, die, wenn das anzupressende Teil (3) auf dem Karosserieelement (1) positioniert ist, sich parallel zu dem Vorsprung (4) und senkrecht zu der Innenseite (2) erstreckt.

2. Anordnung nach Anspruch 1, wobei das Karosserieelement eine Stoßfängerhaut ist.

3. Anordnung nach Anspruch 1 oder 2, wobei das Teil (3) eine Sensorhalterung bildet.

4. Anordnung nach einem der Ansprüche 1 bis 3, wobei das Karosserieelement mehreren Vorsprünge (4) aufweist, die dazu dienen, das anzupressende Teil (3) präzise zu positionieren.

5. Anordnung nach einem der vorhergehenden Ansprüche, wobei der auf der Seite (2) des Karosserieelements (1) gebildete Vorsprung (4) in der Richtung senkrecht zu der Innenseite (2) länger ist als die Lasche (5) des anzupressenden Teils (3).

## Claims

1. An assembly of a bodywork element (1) and a piece (3), a face (3f) of which being for placing against an internal face (2) of the bodywork element (1), the bodywork element (1) including on said internal face (2) a fastening protrusion (4) made of plastic material, said piece (3) having a fastening portion (5) made of plastic material which is joined with said protrusion (4) by melting material,
**characterized in that**
the fastening portion (5) of the piece (3) forms a tab which, when the piece to be placed (3) is positioned against the bodywork element (1), extends parallel to the protrusion (4) and perpendicularly to said internal face (2).

2. An assembly according to claim 1, wherein the bodywork element is a bumper skin.

3. An assembly according to claim 1 or 2, wherein the piece (3) forms a sensor support.

4. An assembly according to any one of the claims 1 to 3, the bodywork element including several protrusions (4) used to precisely position the piece to be placed (3).

5. An assembly according to any one of the preceding claims, wherein the protrusion (4) formed on the face (2) of the bodywork element (1) is longer, in a direction perpendicular to the internal face (2), than the tab (5) of the piece to be placed (3).
